(19) Europäisches Patentamt / European Patent Office / Office européen des brevets

(11) **EP 3 424 642 B1**

(12) **EUROPEAN PATENT SPECIFICATION**

(45) Date of publication and mention
of the grant of the patent:
**10.01.2024 Bulletin 2024/02**

(21) Application number: **16892476.9**

(22) Date of filing: **29.02.2016**

(51) International Patent Classification (IPC):
*B24D 3/32* (2006.01)     *B24D 11/00* (2006.01)
*B24D 15/04* (2006.01)     *B24D 13/14* (2006.01)
*B24D 13/12* (2006.01)     *C08J 9/00* (2006.01)
*C08J 9/42* (2006.01)     *C08L 75/04* (2006.01)

(52) Cooperative Patent Classification (CPC):
**B24D 3/32; B24D 11/00; B24D 11/005;
B24D 13/12; B24D 13/147; B24D 15/04**

(86) International application number:
**PCT/JP2016/056147**

(87) International publication number:
**WO 2017/149631 (08.09.2017 Gazette 2017/36)**

(54) **POROUS POLISHING TOOL AND POLISHING TOOL INCLUDING SAME**

PORÖSES POLIERWERKZEUG UND POLIERWERKZEUG DAMIT

OUTIL DE POLISSAGE POREUX ET OUTIL DE POLISSAGE COMPRENANT CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.01.2019 Bulletin 2019/02**

(73) Proprietor: **Xebec Technology Co., Ltd.
Tokyo 102-0083 (JP)**

(72) Inventors:
• **FUJIWARA, Norimasa
Tokyo 102-0083 (JP)**

• **MURAI, Keiichi
Tokyo 102-0083 (JP)**

(74) Representative: **Hoffmann Eitle
Patent- und Rechtsanwälte PartmbB
Arabellastraße 30
81925 München (DE)**

(56) References cited:
EP-A1- 1 509 364     WO-A1-2009/110231
JP-A- S56 126 581     JP-A- 2002 249 030
JP-A- 2003 175 466     US-A- 3 653 859
US-A1- 2010 068 981

**Description**

Technical Field

The present invention relates to a porous material for polishing which is useful for polishing an object to be polished (including metal, glass, resin, or the like) with high surface accuracy, and a polishing tool having the same.

Background Art

An elastic grindstone, particularly a buff type elastic grindstone is widely used because it has good followability to an object to be polished and is superior in obtaining a mirror surface. When polishing is performed using the buff type elastic grindstone, there are a method of promoting operation while supplying an abrasive to a buff and a method of using a polishing tool having a buff impregnated with an abrasive.

As the polishing tool having a buff impregnated with an abrasive, for example, there has been proposed a polishing tool in which a felt material is uniformly impregnated with a resin by evacuating air of the felt material in a sealed bag (e.g., Patent Literature 1). Further, there have been proposed a polishing tool including an epoxy resin, abrasive grains, and a balloon material (e.g., Patent Literature 2 and 3) and a polishing tool in which abrasive particles are added to a modified melamine resin foam (e.g., Patent Literature 4).

However, when an unskilled person attaches the conventional polishing tool to an automated device and uses it, complicated adjustment to stabilize the device, there is a problem that the adjustment for stabilizing the device becomes complicated in order to obtain precise surface accuracy. The main reason is that the proportion of the abrasive grains in contact with the object to be polished and the resin portion in contact with the object to be polished, which greatly affect the finish roughness of the surface of the object to be polished, is largely changed due to the dropping of the abrasive grains and the resin portion during the polishing operation, and thus the proportion is not constant.

Note that as the elastic grindstone, there has been proposed a gel-like abrasive, which is not used for buffing, in which abrasive grains are dispersed and blended in crosslinked polyrotaxane, and the like (e.g., Patent Literature 5). This gel-like abrasive is granulated to have a particle size of about 0.05 to 5 mm and is used for polishing by blasting.

Citation List

Patent literature

Patent Literature 1: JP H6-158521 A
Patent Literature 2: JP 2010-105102 A
Patent Literature 3: JP 2010-105103 A
Patent Literature 4: JP 2010-535643 A
Patent Literature 5: JP 2009-215327 A EP 1 509 364 A1, which forms the basis of the preamble of claim 1, relates to polishing pads for chemical-mechanical polishing comprising a porous foam wherein the porous foam is formed from a composition comprising a polymer resin and optionally a water absorbent polymer and abrasive particles, which are blended with the polymer resin before foaming and dispersed throughout the porous foam after foaming.

Summary of Invention

Technical Problem

The present invention has been made in view of the above problems. That is, an object of the present invention is to provide a porous material for polishing in which, during the polishing operation, it is possible to keep the proportion between abrasive grains in contact with an object to be polished and a resin portion in contact with the object to be polished within a certain range, even if an unskilled person attaches a polishing tool to an automated device and uses it, there is no need for complicated adjustment to stabilize the device, whereby it is possible to obtain precise surface accuracy.

Solution to Problem

The present invention relates to a porous material for polishing as defined in independent claim 1.
The present invention further preferable that the elastic foam having anisotropy is a resin foam compressed along a normal direction of a predetermined surface constituting a shape of the resin foam, and a displacement amount in the normal direction of a portion to which no load is applied when a predetermined load is applied to a part of the predetermined surface of the elastic foam having anisotropy along the normal direction and no load is applied to other portions of the predetermined surface is smaller than a displacement amount in a normal direction of an arbitrary surface of a portion to which no load is applied when a predetermined load is applied to a part of the arbitrary surface constituting the shape of the resin foam along the normal direction of the arbitrary surface and no load is applied to other portions of the arbitrary surface.

The present invention further preferable that a binding strength of the elastic foam having anisotropy, the polymer, and the abrasive grains satisfies the following condition.

Condition: binding strength between polymer and abrasive grains > internal binding strength between elastic foam having anisotropy and polymer > internal binding strength of elastic foam having anisotropy.

According to the present invention, the polymer is a crosslinked polyrotaxane.

The present invention further preferable that the abrasive grains are one or more compounds selected from the group consisting of diamond, alumina, silica, silicon carbide, cerium oxide, zirconia, and silicon nitride.

The present invention further preferable that a mass ratio of the polymer to the abrasive grains is from 1 : 5 to 5 : 1.

The present invention further preferable that density of the elastic foam having anisotropy is from 5 to 150 Kg/m$^3$.

The present invention further preferable that when a film formed of the polymer and the abrasive grains is broken by sharing stress, the polymer adheres to and remains on surfaces of the abrasive grains.

The present invention relates to a polishing tool having the porous material for polishing as the above.

Advantageous Effects of Invention

According to the present invention, during the polishing operation, it is possible to keep the proportion between the abrasive grains in contact with the object to be polished and the resin portion in contact with the object to be polished within a certain range, even if an unskilled person attaches the polishing tool to an automated device and uses it, there is no need for complicated adjustment to stabilize the device, whereby it is possible to obtain precise surface accuracy.

Brief Description of Drawings

Fig. 1 is a schematic diagram illustrating the shapes of a measurement sample used for measuring shear breaking strength.
Fig. 2 is a perspective view of a tension fixing jig 2 used for measuring shear breaking strength.
Fig. 3 illustrates a top view, a bottom view, and a cross-sectional view of the tension fixing jig 2 used for measuring shear breaking strength.
Fig. 4 is a perspective view of a tension fixing jig 3 used for measuring shear breaking strength.
Fig. 5 illustrates a top view, a bottom view, and a cross-sectional view of the tension fixing jig 3 used for measuring shear breaking strength.
Fig. 6 illustrates a schematic view showing a state in which a measurement sample is fixed by the tension fixing jig 2 and the tension fixing jig 3 in measurement of shear breaking strength.
Fig. 7 is a graph showing a relationship between breaking load and breaking elongation in each elastic foam having anisotropy.
Fig. 8 is a plan view and a front view of a jig used for measuring a displacement amount with respect to a load on the elastic foam having anisotropy.
Fig. 9 is a schematic diagram showing a method of measuring a displacement amount with respect to a load on the elastic foam having anisotropy.
Fig. 10 is a graph showing changes in a displacement amount with respect to a load on each elastic foam having anisotropy.
Fig. 11 is a graph showing changes in a displacement amount with respect to a lateral width of a jig in each elastic foam having anisotropy.
Fig. 12 is an SEM image of abrasive grains present on a breaking surface when a film formed of crosslinked polyrotaxane and abrasive grains is broken by sharing stress.
Fig. 13 show images of results of EDX analysis of abrasive grains present on a breaking surface when a film formed of crosslinked polyrotaxane and abrasive grains is broken by sharing stress.

Description of Embodiments

The porous material for polishing according to the present invention will be described below. The following description is one mode for carrying out the present invention, and the present invention is defined in the claims.

(Elastic Foam Having Anisotropy)

In the present invention, an elastic foam having anisotropy is an elastic foam which has anisotropy in the elastic force. In the present specification, the direction in which the elastic force of the elastic foam having anisotropy is the strongest is defined as a longitudinal direction of the elastic foam having anisotropy. For example, when the elastic foam having anisotropy is compressed in one direction, the compression direction is the longitudinal direction. Further, in this specification, the direction included in the surface orthogonal to the longitudinal direction is defined as a shear direction of the elastic foam having anisotropy. In the porous material for polishing of the present invention, it is preferable that the surface orthogonal to the longitudinal direction is a surface in contact with an object to be polished.

The elastic foam having anisotropy is not particularly limited as long as it can maintain the outer shape of the polishing tool, and examples thereof include foams such as polyurethane, polystyrene, polyolefin, phenol resin, polyvinyl chloride, polyimide, and melamine. Among these, the melamine foam is preferably used from the viewpoint that the foam is excellent in self-dressing capability because it has a low internal binding strength and is easily worn. The present invention provides a polishing tool utilizing the elastic force of the above-described elastic foams having anisotropy or the elastic foams having anisotropy obtained by compressing them.

The melamine foam preferably has a foaming ratio of 5% or more, and more preferably 10% or more. When the melamine foam has a foaming ratio of less than 5%, there is a tendency that the compressive stress increases and the followability to the object to be polished decreases. As the melamine foam, it is preferable to use an open-cell type melamine foam from the viewpoint of improving the followability to the object to be polished.

The shape of the elastic foam having anisotropy can be appropriately changed depending on the purpose of polishing and processing. Preferably, the elastic foam having anisotropy is formed into an arbitrary shape, and then compressed in the longitudinal direction (direction perpendicular to the surface in contact with the object to be polished) so that the elastic foam having anisotropy has a pseudo-layered structure. In the elastic foam having anisotropy which has a pseudo-layered structure, since the elastic foam having anisotropy is easily peeled in layers, the foam is excellent in self-dressing capability.

When a load parallel to the compression direction is applied to the compressed elastic foam having anisotropy, a displacement amount with respect to the load becomes smaller than that before compression. Therefore, when the elastic foam having anisotropy is compressed, it is possible to polish an object to be processed while having flexibility and not following the roughness of the processed surface more than necessary. In other words, it is easy to scrape the recessed portion of the processed surface and it becomes difficult to polish the protruded portion so that the polishing effect tends to be obtained in a short time. As will be described later in the examples, in the shear breaking test of the elastic foam having anisotropy, the breaking strength is almost the same between the compressed product and the uncompressed product, but the compressed product is smaller in breaking elongation. This indicates that when the elastic foam having anisotropy is compressed, self dressing is more likely to occur.

Density of the elastic foam having anisotropy is preferably 5 $Kg/m^3$ or more, more preferably 9 $Kg/m^3$ or more, and still more preferably 9.5 $Kg/m^3$ or more. Further, the density of the elastic foam having anisotropy is preferably 150 $Kg/m^3$ or less, and more preferably 100 $Kg/m^3$ or less. When the density of the elastic foam having anisotropy is less than 5 $Kg/m^3$, it tends to be difficult to maintain the outer shape of the polishing tool. Further, when the density of the elastic foam having anisotropy exceeds 150 $Kg/m^3$, there is a tendency that the compressive stress increases and the followability to the object to be polished decreases.

(Polymer)

In the porous material for polishing of the present invention, a polymer has a role as a binder. The polymer is not particularly limited. For example, from the viewpoint of easily exerting the self-dressing capability, an epoxy-based resin, a urethane-based resin, a polyester-based resin, polyrotaxane, and the like are preferred, a urethane-based resin, polyrotaxane, and the like are more preferred, and polyrotaxane is particularly preferred.

When the polymer bonded around the fiber of the elastic foam having anisotropy is subjected to tension and shear force, the polymer is dropped along the fiber structure of the elastic foam having anisotropy. That is, even if the polymer is singly subjected to tensile and shear force, no self-dressing capability is exerted because the tensile elongation and tensile strength are high. Meanwhile, when the polymer is bonded in the form of a thin film around the fiber of the elastic foam having anisotropy, the polymer easily breaks and self-dressing capability is exerted.

(Polyrotaxane)

In the porous material for polishing of the present invention, it is to use polyrotaxane as the polymer. The polyrotaxane is crosslinked, whereby it plays a role as the binder. The crosslinked polyrotaxane is obtained by crosslinking a plurality of cyclic molecules, linear molecules which include these cyclic molecules in a skewered manner, and polyrotaxane having blocking groups disposed at both ends of the linear molecule in order to prevent release of cyclic molecules, between cyclic molecules.

The crosslinked polyrotaxane as described above has characteristics in that even if the stress is externally applied, the internal stress can be uniformly dispersed and relaxed, elastic deformation tends to occur, and the stress relaxation and compression set are low because of the pulley effect in which a cyclic molecule having a crosslinking point can move along a linear chain molecule that includes a cyclic molecule in a skewered manner. When the crosslinked polyrotaxane is used as the binder of the polishing tool, it is easily elastically deformed by the stress received from the contact with the object to be polished. Meanwhile, the self-recovering property is high, whereby the followability to the object to be polished is improved.

The crosslinked polyrotaxane is obtained by crosslinking cyclic molecules of polyrotaxane with a crosslinking agent. The cyclic molecules constituting the crosslinked polyrotaxane are not particularly limited as long as the cyclic molecules can move on the linear molecule. For example, from the viewpoint that the above pulley effect can be sufficiently exerted, cyclodextrin, crown ether, benzocrown, dibenzocrown or dicyclohexano crown is preferred. Among them, cyclodextrin such as $\alpha$-cyclodextrin, $\beta$-cyclodextrin or $\gamma$-cyclodextrin is more preferably used from the viewpoint of having abundant hydroxyl groups available for crosslinking reaction and being able to reduce the environmental burden upon disposal by its biodegradability. Note that the above compounds may be used singly, or in combination of two or more kinds thereof.

The linear molecule constituting the crosslinked polyrotaxane is not particularly limited, but from the viewpoint of excellent reproducibility and stability, it is preferable to use polyethylene glycol, polypropylene glycol, polyisoprene, polyisobutylene, polybutadiene, polytetrahydrofuran, polydimethylsiloxane, polyethylene or polypropylene. Among them, polyethylene glycol is more preferably used from the viewpoint that cyclic molecules are easily included. Note that the above compounds may be used singly, or may be used as a block copolymer of two or more kinds thereof.

The blocking group constituting the crosslinked polyrotaxane is not particularly limited as long as the blocking group can prevent the release of cyclic molecules included in linear molecules in a skewered manner from the linear molecules. Examples thereof include an adamantyl group, a dinitrophenyl group, a trityl group, fluorescein, and pyrene. Among them, the adamantyl group is preferably used because it can be obtained at low cost. Note that the above compounds may be used singly, or in combination of two or more kinds thereof.

The crosslinking agent for crosslinking the polyrotaxane can be used without particular limitation as long as it is a compound having two or more functional groups capable of reacting with the functional group of the cyclic molecule. Examples of the functional group capable of reacting with a functional group (e.g., a hydroxyl group) of the cyclic molecule include an isocyanate group, a halide group, an epoxy group, an aldehyde group, a carboxyl group, an alkoxysilyl group, an imidazolyl group, and a vinyl group. Specific examples of the crosslinking agent include aliphatic polyfunctional isocyanate, aromatic polyfunctional isocyanate, 2,4-tolylene diisocyanate, hexamethylene diisocyanate, cyanuric chloride, trimesoyl chloride, terephthaloyl chloride, epichlorohydrin, dibromobenzene, glutaraldehyde, and divinylsulfone.

(Abrasive Grain)

The material of the abrasive grains to be used in the porous material for polishing of the present invention can be appropriately selected depending on the type of the object to be polished and the like. For example, in the case where the object to be polished is a metal, diamond, alumina, silica, silicon carbide, silicon nitride, boron carbide, titania, cerium oxide, zirconia, or the like can be used as abrasive grains. Among them, diamond, alumina, silica, silicon carbide, cerium oxide, zirconia, and silicon nitride are preferred from the viewpoint of excellent polishing effect. Note that even organic substances such as walnut and synthetic resin may be used as abrasive grains.

The particle size of the abrasive grains can be appropriately selected depending on the purpose of the polishing and processing. For example, the particle size is preferably 1 nm or more, and more preferably 50 nm or more. Further, the particle size of the abrasive grains is preferably 1 mm or less, and more preferably 100 pm or less. When the particle size of the abrasive grains is less than 1 nm, the polishing (grinding) force tends to decrease and the productivity tends to be low. When the particle size of abrasive grains exceeds 1 mm, the flatness of the surface of the polishing tool tends to deteriorate.

(Porous Material for Polishing)

In the porous material for polishing of the present invention, the binding strength between the polymer and the abrasive grains is preferably larger than the internal binding strength of the elastic foam having anisotropy. In this case, the proportion of the abrasive grains in contact with the object to be polished and the resin portion in contact with the object to be polished tends to be kept within a certain range. During the polishing operation, the following phenomena occurs at the surface of the porous material for polishing of the present invention which is in contact with the object to be polished. First, the elastic foam having anisotropy, of which internal binding strength is small, is easily dropped. Then, the polymer and abrasive grains which have a larger binding strength than that of the elastic foam having anisotropy are exposed at a constant rate. Thereafter, even if the polymer and the abrasive grains are dropped and the elastic foam having anisotropy is exposed, the elastic foam having anisotropy is easily dropped. As a result, the rate at which the polymer and abrasive grains are exposed is kept within a certain range. Therefore, in the porous material for polishing of the present invention, even if an unskilled person attaches the polishing tool to an automated device and uses it, there is no need for complicated adjustment to stabilize the device, whereby it is possible to obtain precise surface accuracy.

In order to keep the proportion of the polymer and abrasive grains exposed in a more constant range, it is preferable that the polymer and abrasive grains are dropped simultaneously. The process of simultaneously dropping the polymer and abrasive grains can be achieved by satisfying, for example, the conditions in which the binding strength between the polymer and abrasive grains is larger than the internal binding strength between the elastic foam having anisotropy and the polymer, and the internal binding strength between the elastic foam having anisotropy and the polymer is larger than the internal binding strength of the elastic foam having anisotropy.

The internal binding strength of the elastic foam having anisotropy can be evaluated by subjecting the elastic foam having anisotropy to a test in accordance with the tensile shear bond strength test prescribed in JIS K6850. The smaller the shear stress at the occurrence of breaking (hereinafter also referred to as "shear breaking strength"), the lower the binding strength. The larger the shear stress at the occurrence of breaking, the higher the binding strength. The shear breaking strength Fx (A) of the elastic foam having anisotropy is preferably 0.01 MPa or more, and more preferably 0.05 MPa or more. Further, the shear breaking strength Fx (A) of the elastic foam having anisotropy is preferably 0.5 MPa or less, and more preferably 0.3 MPa or less. When the shear breaking strength Fx (A) of the elastic foam having anisotropy is less than 0.01 MPa, it tends to be difficult to maintain the outer shape of the polishing tool. Further, when the shear breaking strength Fx (A) of the elastic foam having anisotropy exceeds 0.5 MPa, the self-dressing capability tends to decrease.

The internal binding strength between the polymer and the elastic foam having anisotropy can be evaluated by subjecting a conjugate of the elastic foam having anisotropy and the polymer to a test in accordance with the tensile shear bond strength test prescribed in JIS K6850. The smaller the shear stress at the occurrence of breaking, the lower the binding strength. The larger the shear stress at the occurrence of breaking, the higher the binding strength. The shear breaking strength Fx (B) of the conjugate of the elastic foam having anisotropy and the polymer is preferably 0.1 MPa or more, and more preferably 0.15 MPa or more. Further, the shear breaking strength Fx (B) of the conjugate of the elastic foam having anisotropy and the polymer is preferably 1 MPa or less, and more preferably 0.8 MPa or less.

The binding strength between the polymer and abrasive grains can be evaluated by subjecting a film formed of the polymer and the abrasive grains to a test in accordance with the tensile shear bond strength test prescribed in JIS K6850. The smaller the shear stress at the occurrence of breaking, the lower the binding strength. The larger the shear stress at the occurrence of breaking, the higher the binding strength. The shear breaking strength Fx (C) of the film formed of the polymer and the abrasive grains is preferably 0.3 MPa or more, and more preferably 0.5 MPa or more. Further, the shear breaking strength Fx (C) of the film formed of the polymer and the abrasive grains is preferably 5 MPa or less, and more preferably 3 MPa or less. When the tensile breaking strength Fx (C) of the film formed of the polymer and the abrasive grains is less than 0.3 MPa, the polymer and abrasive grains tend to be hardly dropped at the same time. Further, when the tensile breaking strength Fx (C) of the film formed of the polymer and the abrasive grains exceeds 5 MPa, the self-dressing capability tends to decrease.

Furthermore, the film formed of the polymer and the abrasive grains is subjected to a test in accordance with the tensile shear bond strength test prescribed in JIS K6850. It is preferable that when this film is broken by sharing stress, the polymer adheres to and remains on the surfaces of the abrasive grains. When the polymer adheres to and remains on the surfaces of the abrasive grains, it can be evaluated that the binding strength between the polymer and abrasive grains is larger than the internal binding strength of the polymer. The abrasive grains and the polymer tend to be dropped at the same time. Note that it is possible to evaluate whether the polymer adheres to and remains on the surfaces of the abrasive grains by observing the breaking surface with a scanning electron microscope (SEM).

It is preferable that the shear breaking strength Fx (A) of the elastic foam having anisotropy, the shear breaking strength Fx (B) of the conjugate of the polymer and the elastic foam having anisotropy, and the shear breaking strength Fx (C) of the film formed of the polymer and the abrasive grains satisfy the following formula (1). When the following formula (1) is satisfied, the self-dressing capability is improved, and the proportion of the polymer and abrasive grains exposed on the surface in contact with the object to be polished tends to be easily kept within a certain range.

[Mathematical 1]

$$F x \ (C) > F x \ (B) > F x \ (A) \cdots (1)$$

The porous material for polishing which satisfies the above formula (1) is obtained by, for example, impregnating a melamine resin foam having 5-fold compressed density with a dispersion liquid containing crosslinked polyrotaxane and abrasive grains at a mass ratio of 1 : 1, and firing the resultant foam at a firing temperature of 130°C to 200°C for about 1 to 5 hours.

The porous material for polishing of the present invention is obtained by, dispersing abrasive grains in a solution containing polyrotaxane and a crosslinking agent, impregnating the elastic foam having anisotropy with the abrasive grain dispersion liquid, and then crosslinking polyrotaxane.

The solvent for dissolving polyrotaxane is not particularly limited as long as the solvent can dissolve the polyrotaxane. For example, in the case of using a solvent in which a cyclic molecule of polyrotaxane is cyclodextrin and which contains an isocyanate group as a crosslinking agent, it is preferable to use a hydrophobic organic solvent having no hydroxyl group from the viewpoint of not inhibiting the crosslinking reaction. The hydrophobic organic solvent having no hydroxyl group is not particularly limited. For example, from the viewpoint of being inexpensive and easy to obtain, it is preferable to use an ester-based organic solvent such as ethyl acetate or butyl acetate.

The amount of polyrotaxane to be added is preferably 5 parts by mass or more, and more preferably 10 parts by mass or more with respect to 100 parts by mass of the solvent. The amount of polyrotaxane to be added is preferably 80 parts by mass or less, and more preferably 60 parts by mass or less with respect to 100 parts by mass of the solvent. When the amount of polyrotaxane to be added is less than 5 parts by mass, the content of the crosslinked polyrotaxane decreases when the porous material for polishing is produced, and the followability to the object to be polished tends to decrease. Even if the amount of polyrotaxane to be added exceeds 80 parts by mass, there is a tendency that no further differences in followability to the object to be polished are seen.

The amount of abrasive grains to be added is preferably 5 parts by mass or more and more preferably 10 parts by mass or more with respect to 100 parts by mass of the solvent. Further, the amount of abrasive grains to be added is preferably 80 parts by mass or less, and more preferably 60 parts by mass or less with respect to 100 parts by mass of the solvent. When the amount of abrasive grains to be added is less than 5 parts by mass, the proportion of the abrasive grains exposed on the surface in contact with the object to be polished decreases, and the polishing performance tends to deteriorate. Even if the amount of abrasive grains to be added exceeds 80 parts by mass, there is a tendency that no further difference in polishing performance is seen.

When polyrotaxane is crosslinked, the crosslinking is preferably carried out, for example, under conditions of 150 to 175°C for 1 to 5 hours. When the temperature at which the polyrotaxane is crosslinked is less than 150°C, the crosslinking of the polyrotaxane tends to be insufficient. Further, when the temperature at which the polyrotaxane is crosslinked exceeds 175°C, the polyrotaxane may undergo thermal decomposition.

The mass ratio of the crosslinked polyrotaxane to the abrasive grains is preferably 1 : 5 or more, and more preferably 1 : 4 or more. The mass ratio of the crosslinked polyrotaxane to the abrasive grains is preferably 5 : 1 or less, and more preferably 4 : 1 or less. When the mass ratio of the crosslinked polyrotaxane to the abrasive grains is smaller than 1 : 5, i.e., when the amount of the crosslinked polyrotaxane component is small, a property of being elastically deformed by the stress received from the contact with the object to be polished is hardly exerted and the followability to the object to be polished tends to decrease. Further, when the mass ratio of the crosslinked polyrotaxane to the abrasive grains is larger than 5 : 1, i.e., when the amount of the abrasive grain component is small, the proportion of the abrasive grains exposed on the surface in contact with the object to be polished decreases, and the polishing performance tends to deteriorate.

In the porous material for polishing of the present invention, if necessary, it is possible to add other components such as a filler, an organic/inorganic pigment, a coloring agent (e.g., a dye), a stabilizer, a lubricant, an antioxidant, an ultraviolet absorber, and a mildew-proofing agent.

Examples

Hereinafter, the present invention will be explained in more detail with reference to examples, but the present invention is not limited by these examples.

(Method of Measuring Shear breaking strength and Breaking Elongation)

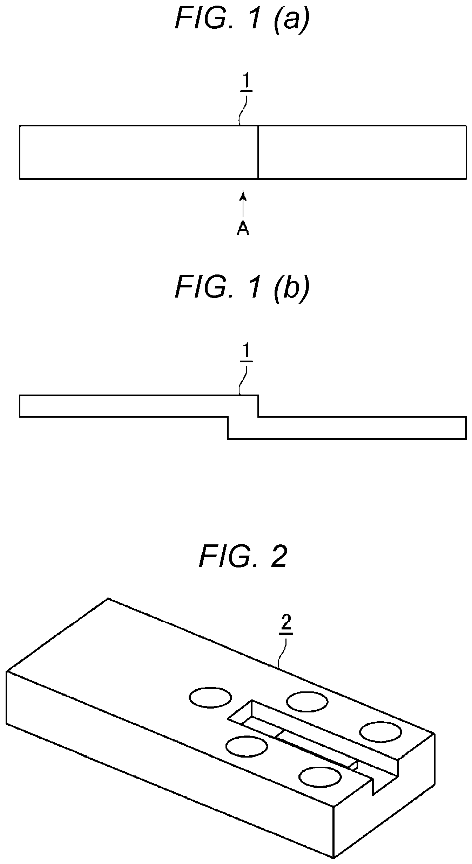

The shear breaking strength Fx (A) of the elastic foam having anisotropy, the shear breaking strength Fx (B) of the conjugate formed of the polymer and the elastic foam having anisotropy, and the shear breaking strength Fx (C) of the film formed of the polymer and the abrasive grains were measured by a test in accordance with the tensile shear bond strength test prescribed in JIS K6850. Specifically, the measurement was performed in the following manner. First, the elastic foam having anisotropy, the conjugate formed of the polymer and the elastic foam having anisotropy, and the film formed of the polymer and the abrasive grains were prepared, which were cut into the shape illustrated in Fig. 1 to form a measurement sample. Fig. 1(a) is a top view of the measurement sample, and Fig. 1(b) is a view of Fig. 1(a) as viewed in the direction of the arrow A. A measurement sample 1 illustrated in Fig. 1 has two rectangular parallelepipeds of 23 mm in length, 5 mm in width and 2 mm in height, in which a part of the bottom surface of one rectangular parallelepiped and a part of the upper surface of the other rectangular parallelepiped are overlapped so that the overlapped portion has a rectangular shape having a length of 3 mm and a width of 5 mm and two sides of one rectangular parallelepiped and two sides of the other rectangular parallelepiped lie on a straight line. In this test, the overlapped portion (rectangular portion having a length of 3 mm and a width of 5 mm) between the bottom surface of one rectangular parallelepiped and the upper surface of the other rectangular parallelepiped is treated as a shear surface (interface).

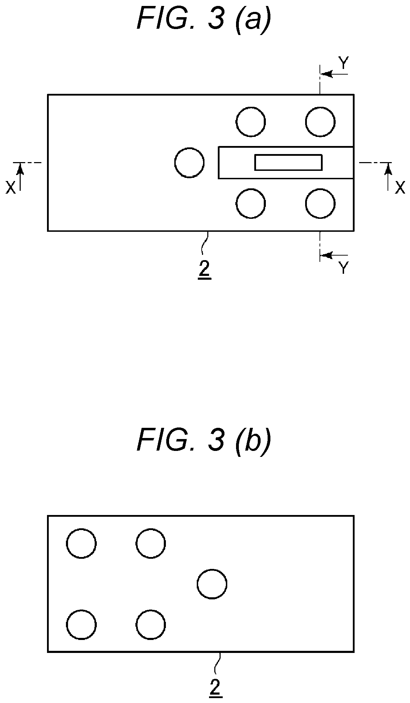

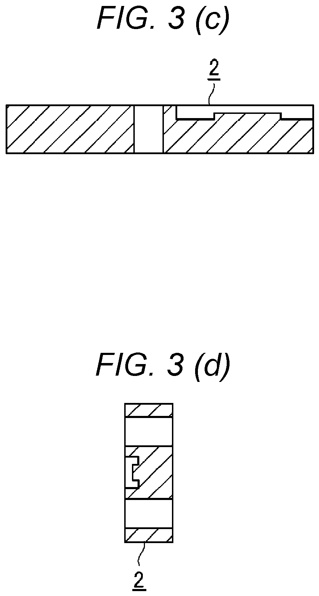

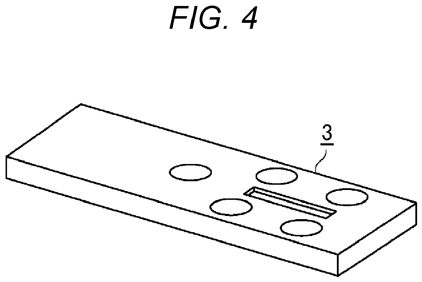

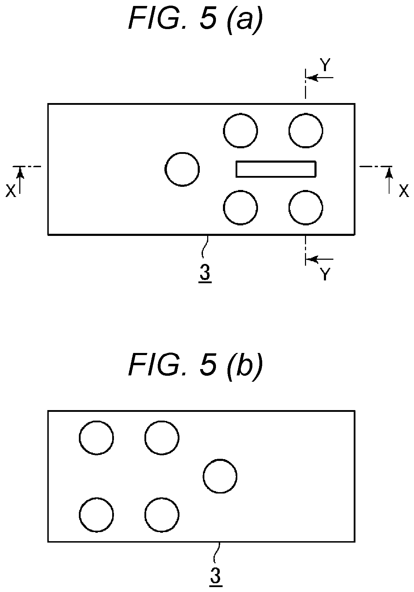

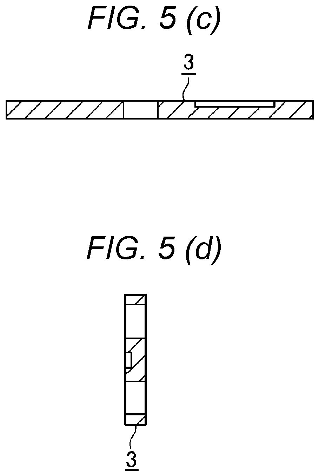

Next, a tension fixing jig 2 illustrated in Figs. 2 and 3 and a tension fixing jig 3 illustrated in Figs. 4 and 5 were prepared. Fig. 2 is a perspective view of the tension fixing jig 2. Fig. 3(a) is a top view of the tension fixing jig 2, and Fig. 3(b) is a bottom view of the tension fixing jig 2. Further, Fig. 3(c) is a cross-sectional view of the tension fixing jig 2 cut along a line X-X illustrated in Fig. 3(a), and Fig. 3(d) is a cross-sectional view of the tension fixing jig 2 cut along a line Y-Y in illustrated in Fig. 3(a). The tension fixing jig 2 has a rectangular parallelepiped shape having a length of 45 mm, a width of 20 mm, and a height of 7 mm.

Fig. 4 is a perspective view of the tension fixing jig 3. Fig. 5(a) is a top view of the tension fixing jig 3, and Fig. 5(b) is a bottom view of the tension fixing jig 3. Fig. 5(c) is a cross-sectional view of the tension fixing jig 3 cut along a line X-X illustrated in Fig. 5(a), and Fig. 5(d) is a cross-sectional view of the tension fixing jig 3 cut along a line Y-Y illustrated in Fig. 4(a). The tension fixing jig 3 has a rectangular parallelepiped shape having a length of 48 mm, a width of 20 mm, and a height of 3 mm.

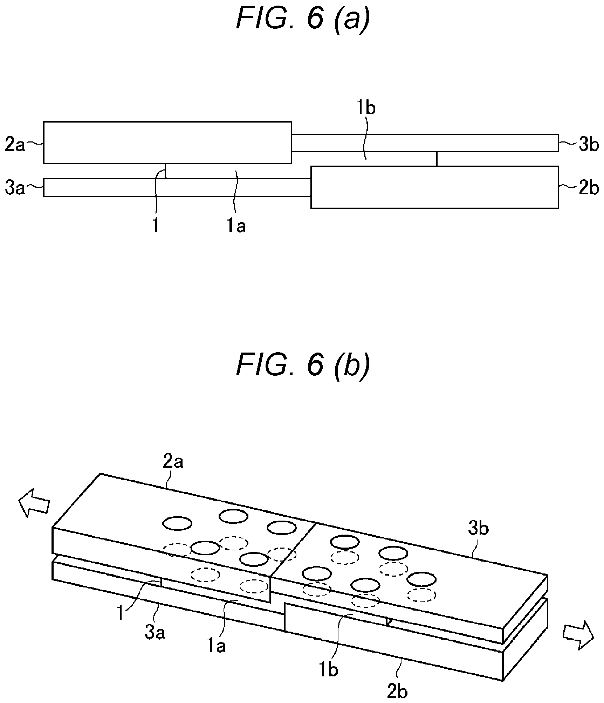

As can be seen from Figs. 2 and 3, each of the tension fixing jigs 2 and 3 has five openings. As illustrated in Fig. 6, when the tension fixing jig 2 and the tension fixing jig 3 are superposed, the positions of these five openings also overlap. By inserting bolts into the overlapped openings, the tension fixing jig 2 and the tension fixing jig 3 can be fixed.

Then, one rectangular parallelepiped portion 1a of the measurement sample 1 was sandwiched from top and bottom by the tension fixing jig 2a and the tension fixing jig 3a. Fig. 6(a) is a view of a state before the measurement sample 1 is sandwiched and fixed by the tension fixing jig 2 and the tension fixing jig 3, as viewed from the side surface direction of these jigs. In this case, one end surface of a tension fixing jig 2a was brought into contact with the other end surface of a rectangular parallelepiped portion 1b of the measurement sample 1. Further, the tension fixing jig 2a and the tension fixing jig 3a were overlapped such that the other end surface of the tension fixing jig 2a was flush with the end surface of a tension fixing jig 3a and both the side surfaces of the tension fixing jig 2a and the tension fixing jig 3a were also flush with each other, and then the measurement sample 1 was sandwiched. Similarly, one rectangular parallelepiped portion 1b of the measurement sample 1 is sandwiched from top and bottom by the tension fixing jig 2b and the tension fixing jig 3b. One end surface of a tension fixing jig 2b was brought into contact with the end surface of a rectangular parallelepiped portion 1b. Further, the tension fixing jigs 2b and 3b were overlapped such that the other end surface of the tension fixing jig 2b was flush with the end surface of a tension fixing jig 3b and both the side surfaces of the tension fixing jig 2b and the tension fixing jig 3b were also flush with each other, and then the measurement sample 1 was sandwiched. Note that the length of the overlapped portion of the rectangular parallelepiped of the measurement sample 1 is 3 mm, the length of the tension fixing jig 2 is 45 mm, and the length of the tension fixing jig 3 is 48 mm. Therefore, when the tension fixing jig 2 and the tension fixing jig 3 are overlapped as illustrated in Fig. 6, the length of the whole fixing jig after fixation is 93 mm, the end surface of the tension fixing jig 2a and the end surface of the tension fixing jig 3b are in contact with each other, and the end surface of the tension fixing jig 2a comes into contact with the end surface of the tension fixing jig 3b.

Fig. 6(b) is a view illustrating the entire fixing jig after the measurement sample 1 is sandwiched and fixed by the tension fixing jig 2 and the tension fixing jig 3. In Fig. 6(a), the upper surface of the tension fixing jig 2a and the upper surface of the tension fixing jig 3b have different height positions, and further the lower surface of the tension fixing jig 2b and the lower surface of the tension fixing jig 3a have different height positions. When the tension fixing jig 2 and the tension fixing jig 3 were fixed, as illustrated in Fig. 6(b), the measurement sample 1 was pressed so that the height positions of the jigs were the same, the upper surface of the tension fixing jig 2a and the upper surface of the tension fixing jig 3b were flush with each other, and the lower surface of the tension fixing jig 2b and the lower surface of the tension fixing jig 3a were flush with each other, whereby these jigs were fixed.

Then, the tension fixing jig 2 and the tension fixing jig 3 were pulled at a rate of 60 mm/min using a constant rate elongation tensile tester (AG-20kNX, manufactured by Shimadzu Corporation) until the shear breaking of the measurement sample occurred. The arrow in Fig. 6(b) represents a direction in which a load is applied, and a tensile test is performed along the length direction of the tension fixing jig 2 and the tension fixing jig 3. The shear breaking strength of the measurement sample was determined by dividing the load at the time when shear breaking occurred in the measurement sample by the shear surface area (length 3 mm × width 5 mm) of the measurement sample. Further, a length obtained by subtracting the length of the measurement sample before the start of the test from the length of the measurement sample after the occurrence of shear breaking in the measurement sample was defined as breaking elongation.

(Measurement of Shear breaking strength Fx (A) of Elastic Foam Having Anisotropy)

As an elastic foam having anisotropy-1, a melamine continuous foam (Basotect, manufactured by BASF Japan Ltd., foaming ratio: about 90 to 110%, density: 9.5 Kg/m$^3$) was prepared. The shear breaking strength Fx (A) and breaking elongation of the elastic foam having anisotropy were measured by the above-described method in accordance with JIS K6850. The measurement results are shown in Table 1.

The shear breaking strength Fx (A) and breaking elongation of an elastic foam having anisotropy-2 were measured in the same manner as in the elastic foam having anisotropy-1 except that a compressed melamine continuous foam (density: about 16 to 20 Kg/m$^3$) obtained by compressing the same melamine continuous foam as the elastic foam having anisotropy-1 in the longitudinal direction was used as the elastic foam having anisotropy-2. The measurement results are shown in Table 1.

The shear breaking strength Fx (A) and breaking elongation of the elastic foam having anisotropy-3 were measured in the same manner as in the elastic foam having anisotropy-1 except that a urethane foam (general-purpose urethane foam, manufactured by Softpren Industry Corporation., density: 20 Kg/m$^3$) was used as the elastic foam having anisotropy-3. The measurement results are shown in Table 1. In the elastic foam having anisotropy-3, shear breaking occurred at a portion other than the interface.

The shear breaking strength Fx (A) and breaking elongation of an elastic foam having anisotropy-4 were measured in the same manner as in the elastic foam having anisotropy-1 except that a felt (28W (WCR28), manufactured by Fujico Corporation, density: 0.28 g/cm$^3$) was used as the elastic foam having anisotropy-4. Shear breaking did not occur in the elastic foam having anisotropy-4.

[Table 1]

|  | Material | Shear breaking strength (MPa) | Breaking elongation (mm) | Remarks |
|---|---|---|---|---|
| Elastic foam having anisotropy-1 | Melamine continuous foam | 0.13 | 7.1 | - |
| Elastic foam having anisotropy-2 | Compressed melamine continuous foam | 0.17 | 2.3 | - |
| Elastic foam having anisotropy-3 | Urethane foam | 0.53 | 8.9 | Shear breaking occurred at portion other than interface |
| Elastic foam having anisotropy-4 | Felt | - | - | Shear breaking did not occur |

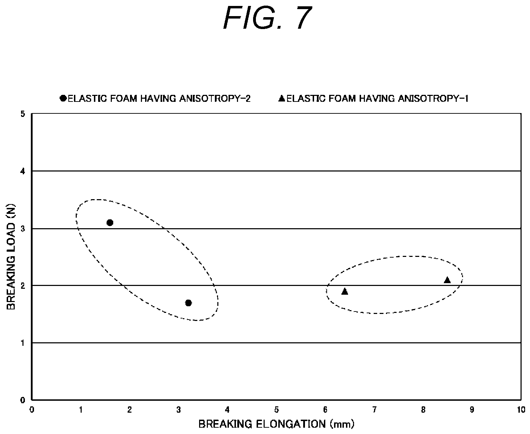

Further, a plurality of measurement samples was produced for the elastic foam having anisotropy-1 and the elastic foam having anisotropy-2, and the breaking load and breaking elongation when the each of the measurement samples was subjected to shear failure by the same test method as above were measured. The graph of measurement results is shown in Fig. 7.

Table 1 and Fig. 7 shows that there is not much difference in shear breaking strength between the elastic foam having anisotropy-2 and the elastic foam having anisotropy-1, but the breaking elongation of the elastic foam having anisotropy-2 is reduced by about one third of that of the elastic foam having anisotropy-1. This means that the elastic foam having anisotropy-2 is easily self-dressed during polishing as compared to the elastic foam having anisotropy-1.

(Measurement of Displacement Amount with Respect to Load of Elastic Foam Having Anisotropy)

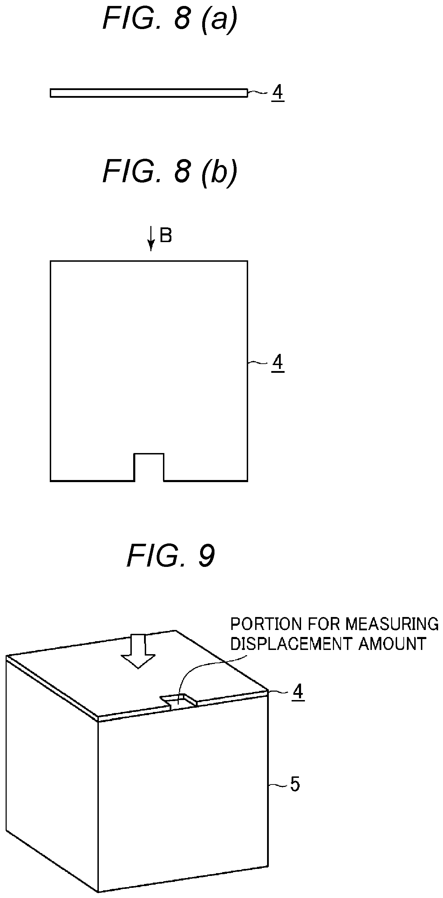

The elastic foam having anisotropy-2 was cut into a rectangular parallelepiped having a length of 40 mm, a width of 35 mm, and a height of 35 mm. At this time, the cutting was performed so that the height direction of the rectangular parallelepiped corresponded to the longitudinal direction of the elastic foam having anisotropy-2. A flat plate-shaped jig 4 as illustrated in Fig. 8 was placed on a surface of the rectangular parallelepiped perpendicular to the height direction of 40 mm in length × 35 mm in width. Fig. 8(a) is a top view of the jig 4, and Fig. 8(b) is a view as viewed from the direction of the arrow B of Fig. 8(a). The jig 4 is a square flat plate having a length of 40 mm, a width of 35 mm, and a thickness of 1 mm, and has a square recess of 5 mm in length and 5 mm in width at the center of one side in the lateral direction.

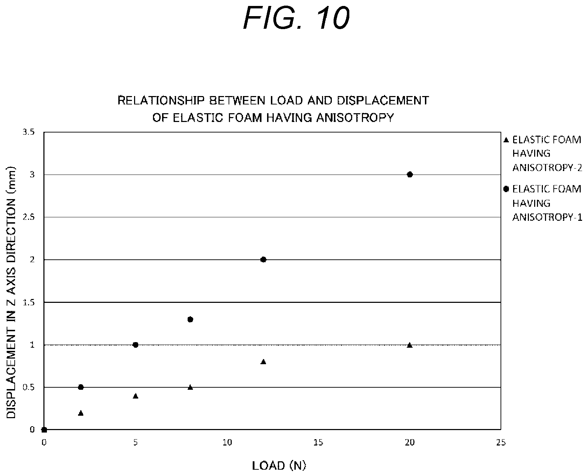

Fig. 9 is a view showing a state in which the jig 4 is placed on the elastic foam having anisotropy-2. Then, as illustrated in Fig. 9, a load is applied to the jig 4 so as to press the elastic foam having anisotropy-2 (an elastic foam having anisotropy 5 in the Figure) along the height direction of the rectangular parallelepiped, and the displacement amount with respect to the load of the elastic foam having anisotropy-2 was measured. In Fig. 9, the arrow indicates the direction in which the load is applied. The portion for measuring the displacement amount was a portion (a portion to which the load is not directly applied) which was exposed from the recess of the jig 4 in the elastic foam having anisotropy-2. The displacement amount was measured while changing the load applied to the jig 4. A graph of the measurement result of the displacement amount is shown in Fig. 10. Note that the displacement amount shown in the graph of Fig. 10 is the average value of the displacement amounts calculated from the displacement amounts at respective points of the measurement portion.

The displacement amount with respect to the load of the elastic foam having anisotropy-1 was measured in the same manner as described above, except that the elastic foam having anisotropy-1 was used in place of the elastic foam having anisotropy-2. A graph of the measurement result of the displacement amount is shown in Fig. 10.

Fig. 10 shows that, in the elastic foam having anisotropy-2 obtained by compressing the melamine continuous foam, the displacement amount with respect to the equivalent load is small as compared to the uncompressed elastic foam having anisotropy-1. Due to this characteristics, the elastic foam having anisotropy-2 has flexibility, but it does not follow the roughness of the processed surface more than necessary and can polish the object to be polished. That is, in the porous material for polishing using the elastic foam having anisotropy-2, it is easy to scrape the protruded portion of the processed surface, while it is difficult to polish the recessed portion. Thus, it is possible to polish the object to be polished in a short time.

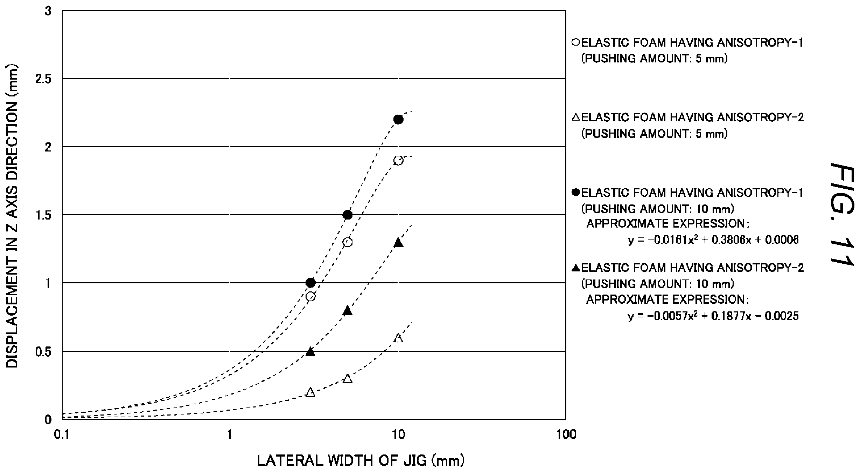

In the measurement test of the displacement amount with respect to the load of the elastic foam having anisotropy as described above, when the length of the jig to be used in the lateral direction was changed and the pushing amount of the jig was 5 mm and 10 mm, the displacement amount of the measurement portion was measured. The measurement results are shown in Table 2. Further, a graph in which the vertical axis represents the displacement amount of the measurement portion and the horizontal axis represents the length of the jig in the lateral direction is shown in Fig. 11.

[Table 2]

| Jig width (mm) | Pushing amount 5 mm | | Pushing amount 10 mm | |
|---|---|---|---|---|
| | Displacement amount of elastic foam having anisotropy-1 (mm) | Displacement amount of elastic foam having anisotropy-2 (mm) | Displacement amount of elastic foam having anisotropy-1 (mm) | Displacement amount of elastic foam having anisotropy-2 (mm) |
| 0 | 0 | 0 | 0 | 0 |
| 3 | 0.9 | 0.2 | 1 | 0.5 |
| 5 | 1.3 | 0.3 | 1.5 | 0.8 |
| 10 | 1.9 | 0.6 | 2.2 | 1.3 |

In the results shown in Table 2 and Fig. 11, assuming that the length in the lateral direction of the jig is the length between the protruded portions on the surface of the object to be polished, the fact that the displacement amount of the measurement portion of the elastic foam having anisotropy is small means that the contact with the recessed portion of the processed surface is reduced and the protruded portion of the processed surface is intensively polished. For example, in a case where the approximation line is followed when the pushing amount is 10 mm, when the length of the jig in the lateral direction is 0.3 mm, the displacement amount of the uncompressed elastic foam having anisotropy-1 is about 0.1 mm, meanwhile the displacement amount of the elastic foam having anisotropy-2 obtained by compressing the melamine continuous foam is about 50 pm. Therefore, the same effect is also exhibited for the roughness and undulation on the processed surface of the object to be polished, and it is considered that the compressed elastic foam having anisotropy has very high polishing efficiency.

(Measurement of Shear breaking strength Fx (B) of Conjugate Formed of Polymer and Elastic Foam Having Anisotropy)

To 100 parts by mass of a solvent containing ethyl acetate and methyl ethyl ketone (MEK), 27 parts by mass of soft urethane-based resin (ADOPT 60L, manufactured by Nihon Resin Co., Ltd.) (20 parts by mass of a main agent and 7 parts by mass of a curing agent) were mixed to prepare a polymer solution. Then, 0.1 part by mass of the elastic foam having anisotropy-2 with respect to 100 parts by mass of the solvent was impregnated with the polymer solution and cured under condition of 20 to 30°C and 24 hours to produce a conjugate-1 formed of a polymer and an elastic foam having anisotropy. The shear breaking strength Fx (B) and breaking elongation of the conjugate-1 were measured by the above-described method in accordance with JIS K6850. The measurement results are shown in Table 3.

A conjugate-2 was produced in the same manner as the conjugate-1 except that the polymer to be mixed with the solvent was replaced with 40 parts by mass of rigid urethane-based resin (RU-15, manufactured by Nihon Resin Co., Ltd.) (20 parts by mass of a main agent and 20 parts by mass of a curing agent), and the curing conditions were changed to 20 to 30°C and 3 hours. The shear breaking strength Fx (B) and breaking elongation of the conjugate-2 were measured by the same method as that of the conjugate-1. The measurement results are shown in Table 3.

A conjugate-3 was produced in the same manner as the conjugate-1 except that the polymer to be mixed with the solvent was replaced with 20 parts by mass of polyrotaxane (SH3400M, manufactured by Advanced Softmaterials Inc.), and the curing conditions were changed to 155°C and 5 hours. The shear breaking strength Fx (B) and breaking elongation of the conjugate-3 were measured by the same method as that of the conjugate-1. The measurement results are shown in Table 3.

A conjugate-4 was produced in the same manner as the conjugate-1 except that the polymer to be mixed with the solvent was replaced with 20.5 parts by mass of epoxy-based resin (main agent: JER 828, curing agent: ST11, manufactured by Mitsubishi Chemical Corporation) (20 parts by mass of a main agent and 0.5 part of a curing agent), and the curing conditions were changed to 100°C and 3 hours. The shear breaking strength Fx (B) and breaking elongation of the conjugate-4 were measured by the same method as that of the conjugate-1. The measurement results are shown in Table 3.

[Table 3]

|  | Elastic foam having anisotropy | Polymer | Shear breaking strength (MPa) | Breaking elongation (mm) |
|---|---|---|---|---|
| Conjugate-1 | Elastic foam having anisotropy-2 | Urethane resin (soft) | 0.47 | 7.3 |
| Conjugate-2 | Elastic foam having anisotropy-2 | Urethane resin (rigid) | 1.00 | 3.4 |
| Conjugate-3 | Elastic foam having anisotropy-2 | Polyrotaxane | 0.33 | 4.5 |
| Conjugate-4 | Elastic foam having anisotropy-2 | Epoxy resin | 0.60 | 2.1 |

(Measurement of Shear breaking strength Fx (C) of Film Formed of Polymer and Abrasive Grains)

To 100 parts by mass of a solvent containing ethyl acetate and MEK, 27 parts by mass of urethane-based resin (RU-15, manufactured by Nihon Resin Co., Ltd.) (20 parts by mass of a main agent and 7 parts by mass of a curing agent) and 20 parts by mass of aluminum oxide abrasive grains (A42-2, manufactured by SHOWA DENKO K.K.) were added and mixed. Then, the mixture was cured at the condition of 35°C and 24 hours to produce a film-1 formed of a polymer and abrasive grains. The shear breaking strength Fx (C) and breaking elongation of the film-1 were measured by the above-described method in accordance with JIS K6850. The measurement results are shown in Table 4.

A film-2 was produced in the same manner as the film-1 except that the polymer was replaced with 20 parts by mass of polyrotaxane (SH3400M, manufactured by Advanced Softmaterials Inc.) and the curing conditions were changed to 155°C and 5 hours. The shear breaking strength Fx (C) and breaking elongation of the film-2 were measured by the same method as that of the film-1. The measurement results are shown in Table 4.

[Table 4]

|  | Polymer | Abrasive grains | Shear breaking strength (MPa) | Breaking elongation (mm) |
|---|---|---|---|---|
| Film-1 | Urethane resin (soft) | Aluminum oxide | 2.00 | 10.2 |

(continued)

|  | Polymer | Abrasive grains | Shear breaking strength (MPa) | Breaking elongation (mm) |
|---|---|---|---|---|
| Film-2 | Polyrotaxane | Aluminum oxide | 0.67 | 9.3 |

It is desirable that the shear breaking strength Fx (A) of the elastic foam having anisotropy, the shear breaking strength Fx (B) of the conjugate formed of the polymer and the elastic foam having anisotropy, and the shear breaking strength Fx (C) of the film formed of the polymer and the abrasive grains satisfy the condition of the above formula (1). Considering from the results of Tables 1, 3, and 4, it is preferable to select the melamine resin foam or the compressed melamine resin foam as the elastic foam having anisotropy and to select urethane or polyrotaxane as the polymer.

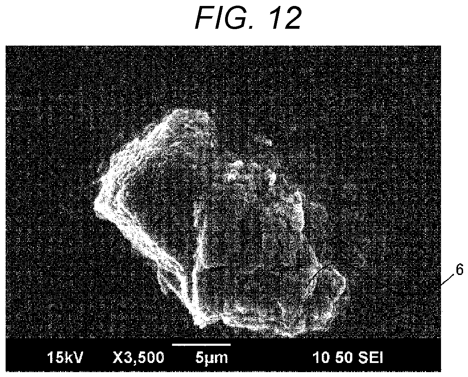

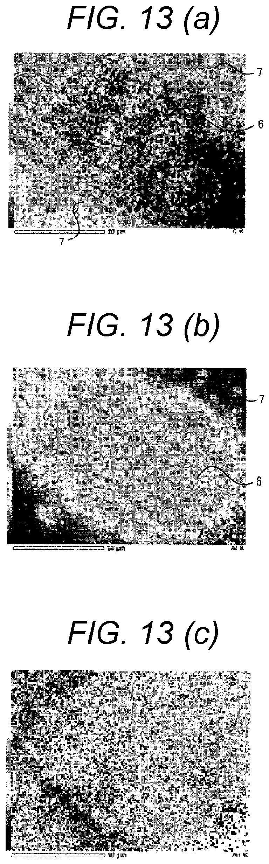

The breaking surface of the film-2 after the above breaking test was observed with SEM. Fig. 12 is an SEM image of abrasive grains present on the breaking surface of the film-2. Fig. 13 show images of the results of EDX analysis (energy dispersive X-ray spectroscopic analysis) of abrasive grains present on the breaking surface of the film-2. Fig. 13(a) shows a map of C concentration, Fig. 13(b) shows a map of Al concentration, and Fig. 13(c) shows a map of Au concentration. As shown in Figs. 12 and 13, it is confirmed that crosslinked polyrotaxane 7 adheres to and remains on the surface of aluminum oxide abrasive grains 6.

(Production of Abrasive Grain Dispersion Liquid)

To 40 parts by mass of a solvent containing ethyl acetate and MEK, 8 parts by mass of polyrotaxane (SH3400M, manufactured by Advanced Softmaterials Inc.) and 8 parts by mass of aluminum oxide (A42-2, manufactured by SHOWA DENKO K.K., center diameter: 4.7 pm) were added and mixed to obtain an abrasive grain dispersion liquid with polyrotaxane dissolved.

(Example 1)

The elastic foam having anisotropy-1 was cut into an approximately cylindrical shape having an outer diameter of 30 mm and a height of 30 mm, and the resultant foam was immersed in 140 parts by mass of the above obtained abrasive grain dispersion liquid (containing 20 parts by mass of polyrotaxane and 20 parts by mass of aluminum oxide) for 5 minutes. This foam was heated at 155°C for 5 hours to crosslink the polyrotaxane, thereby obtaining a porous material for polishing of Example 1.

(Example 2)

A porous material for polishing of Example 2 was obtained in the same manner as in Example 1 except that the elastic foam having anisotropy-2 was used in place of the elastic foam having anisotropy-1.

(Example 3)

A porous material for polishing of Example 3 was obtained in the same manner as in Example 1 except that the elastic foam having anisotropy-3 was used in place of the elastic foam having anisotropy-1.

(Comparative Example 1)

A porous material for polishing of Comparative Example 1 was obtained in the same manner as in Example 1 except that the elastic foam having anisotropy-4 was used in place of the elastic foam having anisotropy-1.

The polishing performance of the porous material for polishing of Example 1 was evaluated by the following method. First, a material obtained by milling SUS304 was prepared as the material to be polished. The roughness of the processed surface after the milling was measured using "SURFCOM 1500 SD 3", manufactured by TOKYO SEIMITSU CO., LTD., and the surface had an arithmetic average roughness (Ra) of 0.35 pm, and a ten-point average roughness (Rz) of 1.6 pm. Next, the 30 mm × 50 mm region of the processed surface of the material to be polished was polished using the porous material for polishing of Example 1 under the conditions of a rotation number of 10000 rpm, a feed speed of 1000 mm/sec, a load of about 150N, and a period of 30 seconds. The roughness of the processed surface after polishing was measured in the same manner as in described above. The results are shown in Table 5.

The polishing performance of each of the porous materials for polishing of Examples 2 and 3 and Comparative Example 1 was evaluated in the same manner as in Example 1. The results are shown in Table 5.

[Table 5]

| | Arithmetic average roughness Ra ($\mu$m) | Ten-point average roughness Rz ($\mu$m) |
|---|---|---|
| Example 1 | 0.03 | 0.4 |
| Example 2 | 0.01 or less | 0.1 or less |
| Example 3 | 0.025 | 0.3 |
| Comparative Example 1 | 0.02 | 0.2 |

The results of Tables 1 and 5 show that the porous materials for polishing of Examples 1 to 3 have a lower shear breaking strength than that of the porous material for polishing of Comparative Example 1 and is superior in self-dressing capability. Nevertheless, the polishing performance of Examples 1 to 3 is equal or more superior to that of Comparative Example 1. In other words, when the porous materials for polishing of Examples 1 to 3 are self-dressed in spite of being easily self-dressed, i.e., even if the tip portion (a portion in contact with the object to be polished) is dropped during the polishing operation, it is possible to keep the proportion of the abrasive grains in contact with the object to be polished and the resin portion in contact with the object to be polished within a certain range. On the other hand, in the porous material for polishing of Comparative Example 1, for example, due to the reason that the internal binding strength between the elastic foam having anisotropy and the polymer is smaller than the internal binding strength of the elastic foam having anisotropy, it is difficult to keep the proportion of the abrasive grains in contact with the object to be polished and the resin portion in contact with the object to be polished within a certain range.

The proportion of the abrasive grains in contact with the object to be polished and the resin portion is changed by performing the polishing, and thus the polishing force of the polishing tool is also changed as the polishing time becomes longer. For example, a lot of abrasive grains are dropped and the contact area between the object to be polished and the resin portion is increased, whereby the polishing force is decreased. Further, when the dropping amount of the resin portion is larger than that of the abrasive grains, clogging occurs in a portion (valley) where the resin is dropped, and the polishing force is also decreased.

In order to evaluate changes in the polishing performance depending on the polishing time, the porous materials for polishing of Examples 1 to 3 and Comparative Example 1 were subjected to the following test. The test was carried out under the same conditions as in the above-described polishing performance evaluation test except that the number of polishing was increased to 10 times. Specifically, ten materials to be polished were prepared. Then, different portions of the first material to be polished were polished once using the porous materials for polishing of Examples 1 to 3 and Comparative Example 1. The second to tenth materials to be polished were polished in the same manner as described above. The surface roughness of the tenth material to be polished after the test is shown in Table 6.

[Table 6]

| | Arithmetic average roughness Ra ($\mu$m) | Ten-point average roughness Rz ($\mu$m) |
|---|---|---|
| Example 1 | 0.035 | 0.35 |
| Example 2 | 0.01 | 0.1 or less |
| Example 3 | 0.02 | 0.25 |
| Comparative Example 1 | 0.2 | 0.8 |

The comparison of Tables 5 and 6 shows that, in the porous material for polishing of Comparative Example 1, the polishing force is greatly decreased as the polishing time becomes longer, and thus the proportion between the abrasive grains in contact with the material to be polished and the resin portion is not kept constant. On the other hand, in the porous materials for polishing of Examples 1 to 3, the polishing force is not greatly changed even if the polishing time becomes longer, and the proportion between the abrasive grains in contact with the material to be polished and the resin portion is kept constant. For example, even if an unskilled person attaches the polishing tool to an automated device and uses it, there is no need for complicated adjustment to stabilize the device, whereby it is possible to obtain precise surface accuracy.

As described above, the porous material for polishing of the present invention including the elastic foam having anisotropy can be suitably used as a rotating polishing tool with a shaft. The method of using the porous material for polishing of the present invention is not limited to use as the rotating polishing tool, and the self-dressing capability can be utilized even by other methods of use. For example, the porous material for polishing can be used for polishing by hand. In that case, the porous material for polishing is molded into a shape including a rectangular parallelepiped and a cube, according to the application. Further, the porous material for polishing can also be used in a machine tool that does not have the power to rotate the tool. In such a case, polishing can be performed by bringing the polishing tool and the object to be processed into contact with each other while subjecting the polishing tool and the object to be processed to relative motion. Examples of the relative motion include reciprocating motion or orbital motion of the polishing tool with respect to the fixed object to be processed, and reciprocating motion or orbital motion of the object to be processed with respect to the fixed polishing tool.

Reference Signs List

1    Measurement sample
2    Tension fixing jig
3    Tension fixing jig
4    Jig
5    Elastic foam having anisotropy
6    Abrasive grain
7    Crosslinked polyrotaxane

**Claims**

1. A porous material for polishing comprising:

   an elastic foam (5) having anisotropy;
   a polymer; and
   abrasive grains (6);
   **characterized in that**
   the polymer is a crosslinked polyrotaxane (7); and
   the porous material for polishing is obtained by impregnating the elastic foam (5) with a dispersion liquid comprising the abrasive grains (6), polyrotaxane and a crosslinking agent and then crosslinking the polyrotaxane.

2. The porous material for polishing according to claim 1, wherein

   the elastic foam having anisotropy (5) is a resin foam compressed along a normal direction of a predetermined surface constituting a shape of the resin foam, and
   a displacement amount in the normal direction of a portion to which no load is applied when a predetermined load is applied to a part of the predetermined surface of the elastic foam having anisotropy (5) along the normal direction and no load is applied to other portions of the predetermined surface is smaller than a displacement amount in a normal direction of an arbitrary surface of a portion to which no load is applied when a predetermined load is applied to a part of the arbitrary surface constituting the shape of the resin foam along the normal direction of the arbitrary surface and no load is applied to other portions of the arbitrary surface.

3. The porous material for polishing according to claim 1 or 2, wherein a binding strength of the elastic foam having anisotropy (5), the polymer, and the abrasive grains (6) satisfies the following condition:
   binding strength between polymer and abrasive grains > internal binding strength between elastic foam having anisotropy and polymer > internal binding strength of elastic foam having anisotropy.

4. The porous material for polishing according to any one of claims 1 to 3, wherein the abrasive grains (6) are one or more compounds selected from the group consisting of diamond, alumina, silica, silicon carbide, cerium oxide, zirconia, and silicon nitride.

5. The porous material for polishing according to any one of claims 1 to 4, wherein a mass ratio of the polymer to the abrasive grains (6) is from 1 : 5 to 5 : 1.

6. The porous material for polishing according to any one of claims 1 to 5, wherein density of the elastic foam having anisotropy (5) is from 5 to 150 Kg/m$^3$.

**7.** A polishing tool having the porous material for polishing according to any one of claims 1 to 6.

## Patentansprüche

**1.** Poröses Material zum Polieren, umfassend:

einen elastischen Schaum (5) mit Anisotropie;
ein Polymer; und
Schleifkörner (6);
**dadurch gekennzeichnet, dass**
das Polymer ein quervernetztes Polyrotaxan (7) ist; und
das poröse Material zum Polieren durch Imprägnieren des elastischen Schaums (5) mit einer Dispersionsflüssigkeit, umfassend die Schleifkörner (6), Polyrotaxan und ein Quervernetzungsmittel, und anschließendes Quervernetzen des Polyrotaxans erhalten wird.

**2.** Poröses Material zum Polieren gemäß Anspruch 1, worin

der elastische Schaum mit Anisotropie (5) ein Harzschaum ist, der entlang einer Normalrichtung einer vorbestimmten Oberfläche, die eine Form des Harzschaums bildet, komprimiert ist, und
ein Verschiebungsbetrag in der Normalrichtung eines Bereichs, auf den keine Last ausgeübt wird, wenn eine vorbestimmte Last auf einen Teil der vorbestimmten Oberfläche des elastischen Schaums mit Anisotropie (5) entlang der Normalrichtung ausgeübt wird und auf andere Bereiche der vorbestimmten Oberfläche keine Last ausgeübt wird, kleiner ist als ein Verschiebungsbetrag in einer Normalrichtung einer beliebigen Oberfläche eines Bereichs, auf den keine Last ausgeübt wird, wenn eine vorbestimmte Last auf einen Teil der beliebigen Oberfläche, die die Form des Harzschaums bildet, entlang der Normalrichtung der beliebigen Oberfläche ausgeübt wird, und auf andere Bereiche der beliebigen Oberfläche keine Last ausgeübt wird.

**3.** Poröses Material zum Polieren gemäß Anspruch 1 oder 2, worin eine Bindungsstärke des elastischen Schaums mit Anisotropie (5), des Polymers und der Schleifkörner (6) die folgende Bedingung erfüllt:
Bindungsstärke zwischen Polymer und Schleifkörnern > interne Bindungsstärke zwischen elastischem Schaum mit Anisotropie und Polymer > interne Bindungsstärke des elastischen Schaums mit Anisotropie.

**4.** Poröses Material zum Polieren gemäß einem der Ansprüche 1 bis 3, worin die Schleifkörner (6) eine oder mehrere Verbindungen sind, ausgewählt aus der Gruppe bestehend aus Diamant, Aluminiumoxid, Siliciumdioxid, Siliciumcarbid, Ceroxid, Zirkoniumdioxid und Siliciumnitrid.

**5.** Poröses Material zum Polieren gemäß einem der Ansprüche 1 bis 4, worin ein Massenverhältnis des Polymers zu den Schleifkörnern (6) von 1:5 bis 5:1 beträgt.

**6.** Poröses Material zum Polieren gemäß einem der Ansprüche 1 bis 5, worin die Dichte des elastischen Schaums mit Anisotropie (5) von 5 bis 150 kg/m$^3$ beträgt.

**7.** Polierwerkzeug, das das poröse Material zum Polieren gemäß einem der Ansprüche 1 bis 6 enthält.

## Revendications

**1.** Matériau poreux de polissage comprenant :

une mousse élastique (5) présentant une anisotropie ;
un polymère ; et
des grains abrasifs (6) ;
**caractérisé en ce que**
le polymère est un polyrotaxane réticulé (7) ; et
le matériau poreux de polissage est obtenu en imprégnant la mousse élastique (5) avec un liquide de dispersion comprenant les grains abrasifs (6), du polyrotaxane et un agent de réticulation et ensuite en réticulant le polyrotaxane.

**2.** Matériau poreux de polissage selon la revendication 1, dans lequel

la mousse élastique présentant une anisotropie (5) est une mousse de résine comprimée le long d'une direction normale d'une surface prédéterminée constituant une forme de la mousse de résine, et

une quantité de déplacement dans la direction normale d'une partie à laquelle aucune charge n'est appliquée lorsqu'une charge prédéterminée est appliquée à une partie de la surface prédéterminée de la mousse élastique présentant une anisotropie (5) le long de la direction normale et qu'aucune charge n'est appliquée à d'autres parties de la surface prédéterminée est inférieure à une quantité de déplacement dans une direction normale d'une surface arbitraire d'une partie à laquelle aucune charge n'est appliquée lorsqu'une charge prédéterminée est appliquée à une partie de la surface arbitraire constituant la forme de la mousse de résine le long de la direction normale de la surface arbitraire et qu'aucune charge n'est appliquée à d'autres parties de la surface arbitraire.

**3.** Matériau poreux de polissage selon la revendication 1 ou la revendication 2, dans lequel la force de liaison de la mousse élastique anisotrope (5), du polymère, et des grains abrasifs (6) satisfait à la condition suivante :
force de liaison entre le polymère et les grains abrasifs > force de liaison interne entre la mousse élastique présentant une anisotropie et le polymère > force de liaison interne de la mousse élastique présentant une anisotropie.

**4.** Matériau poreux de polissage selon l'une quelconque des revendications 1 à 3, dans lequel les grains abrasifs (6) sont un ou plusieurs composés choisis dans le groupe constitué du diamant, de l'alumine, de la silice, du carbure de silicium, de l'oxyde de cérium, de la zircone, et du nitrure de silicium.

**5.** Matériau poreux de polissage selon l'une quelconque des revendications 1 à 4, dans lequel le rapport de masse entre le polymère et les grains abrasifs (6) est de 1 : 5 à 5 : 1.

**6.** Matériau poreux de polissage selon l'une quelconque des revendications 1 à 5, dans lequel la densité de la mousse élastique présentant une anisotropie (5) est de 5 à 150 kg/m$^3$.

**7.** Outil de polissage ayant le matériau poreux de polissage selon l'une quelconque des revendications 1 à 6.

## FIG. 1 (a)

## FIG. 1 (b)

## FIG. 2

# FIG. 3 (a)

# FIG. 3 (b)

FIG. 3 (c)

FIG. 3 (d)

## FIG. 4

3

## FIG. 5 (a)

## FIG. 5 (b)

*FIG. 5 (c)*

3

*FIG. 5 (d)*

3

# FIG. 6 (a)

# FIG. 6 (b)

# FIG. 7

●ELASTIC FOAM HAVING ANISOTROPY-2     ▲ELASTIC FOAM HAVING ANISOTROPY-1

## FIG. 8 (a)

$\sim \underline{4}$

## FIG. 8 (b)

↓B

$\sim \underline{4}$

## FIG. 9

PORTION FOR MEASURING
DISPLACEMENT AMOUNT

$\sim \underline{4}$

$\sim 5$

# FIG. 10

RELATIONSHIP BETWEEN LOAD AND DISPLACEMENT
OF ELASTIC FOAM HAVING ANISOTROPY

▲ ELASTIC FOAM HAVING ANISOTROPY-2

● ELASTIC FOAM HAVING ANISOTROPY-1

DISPLACEMENT IN Z AXIS DIRECTION (mm)

LOAD (N)

## FIG. 11

○ ELASTIC FOAM HAVING ANISOTROPY-1
(PUSHING AMOUNT: 5 mm)

△ ELASTIC FOAM HAVING ANISOTROPY-2
(PUSHING AMOUNT: 5 mm)

● ELASTIC FOAM HAVING ANISOTROPY-1
(PUSHING AMOUNT: 10 mm)
APPROXIMATE EXPRESSION:
$y = -0.0161x^2 + 0.3806x + 0.0006$

▲ ELASTIC FOAM HAVING ANISOTROPY-2
(PUSHING AMOUNT: 10 mm)
APPROXIMATE EXPRESSION:
$y = -0.0057x^2 + 0.1877x - 0.0025$

LATERAL WIDTH OF JIG (mm)

DISPLACEMENT IN Z AXIS DIRECTION (mm)

FIG. 12

## FIG. 13 (a)

## FIG. 13 (b)

## FIG. 13 (c)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H6158521 A
- JP 2010105102 A
- JP 2010105103 A
- JP 2010535643 A
- JP 2009215327 A
- EP 1509364 A1